# EUROPÄISCHE PATENTSCHRIFT

(11) **EP 0 669 080 B1**
(45) Veröffentlichungstag und Bekanntmachung des Hinweises auf die Patenterteilung: **03.09.1997**
(21) Anmeldenummer: 95102034.6
(22) Anmeldetag: 14.02.1995
(51) Int. Cl.: A21C 1/02

(54) **Entleerungshilfe-Anordnung für den Teigkessel einer Teigknet- und -Mischmaschine**
Auxiliary device for emptying a paste receptacle of a paste kneading and mixing machine
Dispositif pour aider la vidange d'un récipient de pâte d'une machine de pétrissage et de mélange de pâte

(30) Priorität: 24.02.1994 DE 9403106 U
(43) Veröffentlichungstag der Anmeldung: 30.08.1995
(73) Patentinhaber: G. L. EBERHARDT GmbH, D-82166 Gräfelfing (DE)
(72) Erfinder: Schüpferling, Reinhard, D-85716 Unterschleissheim (DE)
(74) Vertreter: Hoffmann, Eckart, Dipl.-Ing.

(56) Entgegenhaltungen:
- DE-A- 3 013 590
- FR-A- 876 727
- US-A- 1 733 945
- US-A- 2 186 478

## Beschreibung

Die Erfindung betrifft eine Entleerungshilfe-Anordnung nach dem Oberbegriff des Patentanspruchs 1.

Bei einer Teigknet- und -mischmaschine der hier in Frage stehenden Art (nachfolgend einfach als Maschine bezeichnet) handelt es sich um eine solche, wie sie in Bäckereibetrieben zum Mischen und Kneten größerer Teigmengen (100 kg und mehr) verwendet wird. Das Kesselvolumen derartiger Maschinen beträgt über 100 l und kann bis zu 400 l und mehr gehen.

Aus dem Prospekt "Eberhardt Maximat. Zukunftsweisende Spiralknettechnik für optimale Gebäck-Qualität" der Firma G.L. Eberhardt GmbH, Gräfelfing b. München, ist eine erste Art einer solchen Maschine bekannt. Bei ihr ist der Kessel auf einer waagerechten Konsole der Maschine drehbar gelagert, aber fest mit ihr verankert. Am oberen Ende eines seitlich neben dem Kessel hochstehenden Maschinenteils ist ein Knetkopf zwischen einer Knetstellung und einer Entnahmestellung um eine horizontale Achse verschwenkbar angebracht. In seiner Knetstellung erstreckt sich der Knetkopf über den Kessel, und ein (oder mehrere) an ihm befestigtes Knet- oder Rührwerkzeug ragt in den Kessel hinein. In dieser Position erfolgt das Mischen bzw. Kneten unter Drehen des Knet- oder Rührwerkzeugs und gegebenenfalls mitläufiger oder gegenläufiger Drehung des Kessels. In der Entnahmestellung des Knetkopfes ist das Knet- oder Rührwerkzeug über den oberen Rand des Kessels hinaus angehoben, um die manuell erfolgende Entleerung des Kessels nicht zu behindern. Zur Entleerung wird der Teig portionsweise entnommen. Dies bedeutet, daß sich die Bedienungsperson je nach Teigmenge und verbleibendem Füllstand mehr oder weniger häufig über den Kessel und mehr oder weniger tief in den Kessel hinein beugen muß, um den Teig zur Weiterverarbeitung zu entnehmen. Die Entleerung stellt daher eine ausgesprochen anstrengende, den Körper stark belastende Arbeit da.

Eine aus demselben Prospekt bekannte zweite Maschine unterscheidet sich von der vorgenannten dadurch, daß der Kessel so an einem Wagen verankert ist, daß er mit diesem eine Einheit bildet. Dazu befindet sich an der Oberseite des Wagens ein drehbar gelagerter Flansch, an den der Kessel angeschraubt ist. Der Kessel ist in seiner Betriebsstellung, wenn der Wagen in eine für ihn vorgesehene Ausnehmung in der Konsole der Maschine eingefahren ist. Bei in die Entnahmestellung geschwenktem Knetkopf kann die Wagen-Kessel-Einheit mit Hilfe eines dafür vorgesehenen Handgriffs aus der Maschine herausgezogen werden.

Die Befestigung des Kessels an dem Wagen und die Möglichkeit, die Wagen-Kessel-Einheit aus der Maschine herauszufahren, erleichtert bereits die Entnahme des fertigen Teigs aus dem Kessel, die bei in Betriebstellung befindlichem Kessel durch den zwar hochgeschwenkten, aber doch vorhandenen Knetarm beeinträchtigt wird.

Zur weiteren Vereinfachung der Entleerung des Kessels dieser zweiten Maschine ist es bekannt, eine ortsfeste Hub/Kippvorrichtung zu verwenden, den Wagen mit dem darauf befestigten Kessel zu dieser Hub/Kippvorrichtung zu fahren und ihn an einer Tragvorrichtung dieser Hub/Kippvorrichtung zu verriegeln. Mittels eines Hebezeugs werden dann Wagen und Kessel gemeinsam angehoben und so verschwenkt, daß die Öffnung des Kessels mit verschiedenen Winkeln gegen die Horizontale geneigt wird, so daß ein Entleeren des Kessels möglich wird, ohne daß sich eine Bedienungsperson mehrfach über den Rand des Kessels in diesen hineinbeugen muß.

Die zweite der bekannten Maschinen hat den weiteren Vorteil, daß für eine Maschine mehrere Wagen-Kessel-Einheiten angeschafft werden können, so daß beispielsweise während der Entleerung eines Kessels in einem zweiten bereits neuer Teig bearbeitet werden kann. Dieser Vorteil ist mit entsprechend höheren Kosten verbunden, die sich in den meisten Fällen nur für größere Bäckereibetriebe rentieren.

Bei dem Teig kann es sich, je nach Zusammensetzung, um eine ausgesprochen zähe, klebrige Masse handeln, durch die der Kessel und der ihn tragende Wagen beim Kneten sehr großen Kräften ausgesetzt werden. Der Wagen und die drehbare Lagerung der Kessels an dem Wagen müssen eine diesen Kräften standhaltende Stabilität aufweisen, was zwangsläufig zu einem hohen Gewicht der Wagen-Kessel-Einheit führt. So ist der Gewichtsanteil des Wagens bezogen auf die Wagen-Kessel-Einheit bei gefülltem Kessel mit ca. 45% zu veranschlagen (bei einem Gesamtgewicht von ca. 450 kg im Fall eines ca. 400 l fassenden Kessels). Dieses Gewicht wiederum erfordert eine entsprechend dimensionierte Hub/Kippvorrichtung, die ebenfalls entsprechend teuer ist und deshalb für kleinere Bäckereibetriebe kaum in Betracht kommt. Die bekannte Anordnung zur Entleerungshilfe des Kessels, die von einem fest auf einem Wagen montierten Kessel und einer ortsfesten, große Raumhöhe erfordernden Hub/Kippvorrichtung Gebrauch macht ist daher sowohl aus Kostengründen als auch aus Platzgründen für kleinere Bäckereibetriebe nicht geeignet.

Aus der DE-A-30 13 590 ist eine Knetmaschine mit von dem Maschinengehäuse abnehmbarem Kessel bekannt, bei der der abgenommene Kessel mit einem Wagen vom Maschinengestell wegfahrbar ist, der Wagen jedoch nicht fest mit dem Kessel verbunden ist. Der Kessel ist über eine formschlüssige Kupplung lösbar mit einer im Maschinengehäuse gelagerten Antriebswelle verbunden. Die Kupplung umfaßt maschinenseitig einen mit kegelstumpfförmiger Außenfläche versehenen, drehbar gelagerten und antreibaren Tragkopf, in dem radial verschiebbar geführte Haltebolzen gelagert sind. Am Boden des Kessels ist ein Tragkranz vorgesehen, dessen Innenfläche komplementär zur Außenfläche des Tragkranzes ist und in dem ein Rastkranz zur Aufnahme der Haltebolzen ausgebildet ist. Das Maschinengehäuse enthält eine Hubvorrichtung, mit der der Kessel aus seiner Gebrauchsstellung in der Maschine in eine Entnahmestellung anhebbar ist. Beim Hochfahren der Hubvorrichtung werden die Haltebolzen radial nach innen gezogen, beim Absenken entsprechend nach außen gedrückt, wodurch die formschlüssige Kupplung gelöst bzw. eingerastet wird. In der Entnahmestellung kann der Wagen unter den Kessel gefahren werden, der danach bis zur Auflage auf Stützen des Wagen wieder abgesenkt wird.

Aufgabe der vorliegenden Erfindung ist es, eine Entleerungshilfe-Anordnung der eingangs angegebenen Art zu schaffen, die die Entleerung des Kessels in mindestens dem gleichen Maße erleichtert, wie dies bei dem vorgenannten Stand der Technik der Fall ist, jedoch sehr viel preiswerter ist und geringeren Platzbedarf hat, so daß sich ihr Einsatz auch bei kleineren Bäckereibetrieben lohnt.

Diese Aufgabe wird erfindungsgemäß durch eine Entleerungshilfe-Anordnung gemäß Patentanspruch 1 gelöst.

Bei der erfindungsgemäßen Anordnung ist der Kessel direkt in einer Konsole der Maschine drehbar gelagert, das heißt er ist nicht Bestandteil einer Wagen-Kessel-Einheit. Die Lagerung des Kessels in der Maschine ist mit Hilfe einer formschlüssigen Kupplung indes so gestaltet, daß der Kessel durch Anheben von der Konsole gelöst werden kann, um dann aus der Maschine herausgetragen zu werden. Die Erfindung beruht auf der Erkenntnis, daß durch Verzicht auf den einen lösbaren Bestandteil der Maschine darstellenden Wagen zunächst einmal die Kosten für die Maschine deutlich gesenkt werden können, und zum anderen darauf, daß, wenn nur der Kessel mit seinem Inhalt aus der Maschine entnommen wird, sehr viel geringere Kräfte für das die Entleerung erleichternde Heben und Kippen des Kessels aufzubringen sind. Für diese geringeren Kräfte bedarf es nicht der bekannten großdimensionierten ortsfesten Hub/Kippvorrichtung, sondern es kann eine an einem Wagen fahrbar ausgebildete Hub/Kippvorrichtung eingesetzt werden. Dieser Wagen ist so ausgebildet, daß er an die den Kessel in Betriebsstellung enthaltende Maschine herangefahren werden kann, wobei der Kessel automatisch mit einer Kesseltragvorrichtung des Wagens in einen Trageingriff gelangt. Durch Anheben der Kesseltragvorrichtung mit Hilfe eines geeigneten Hebezeugs kann der Kessel dann zunächst so weit angehoben werden, daß er sich aus dem Kupplungseingriff mit der Maschine löst. Der nunmehr am Wagen fixierte Kessel kann mit diesem zusammen zu einem beliebigen Entleerungsplatz gefahren werden, wo der Kessel mit Hilfe des Hebezeugs auf eine geeignete Entleerungshöhe angehoben und/oder gekippt werden kann. Nach der Entleerung wird der Wagen mit dem Kessel wieder zur Maschine in die gleiche Stellung zurückgefahren, in der er zuvor entnommen wurde. Durch Absenken des Kessels in dieser Stellung gelangt dieser automatisch wieder in den Kupplungseingriff mit der Maschine, woraufhin der Wagen wieder abgezogen werden kann.

Die formschlüssige Kupplung zwischen dem Kessel und der Maschine ist erfindungsgemäß also so ausgebildet, daß sie allein durch Vertikalbewegung des Kessels relativ zur Maschine gelöst bzw. in Eingriff gebracht werden kann. Dabei muß die Kupplung den beim Kneten möglicherweise auftretenden hohen Kräften standhalten und eine sichere Führung und Halterung des Kessels in der Maschine gewährleisten. Gemäß einer vorteilhaften Weiterbildung der Erfindung ist zu diesem Zweck ein Kegelstumpf als mit einer in der Konsole der Maschine drehbar gelagerten Welle verbundenes maschinenseitiges Kupplungsteil vorgesehen, das mit einem kesselseitigen Kupplungsteil zusammenwirkt, welches eine zu dem Kegelstumpf im wesentlichen komplementäre Aufnahme aufweist. Dabei sind Durchmesser, Höhe und Öffnungswinkel des Kegelstumpfes so gewählt, daß einerseits keine Selbsthemmung auftritt, andererseits aber die erforderliche, den auftretenden Kräften standhaltende Halterung des Kessels in der Maschine gewährleistet wird und schließlich die Kegelform die selbsttätige Zentrierung beim Wiedereinsetzen des Kessels in die Maschine bewirkt. Die Kessel der bekannten Maschinen weisen vielfach im zentralen Bereich ihres Bodens eine domartige, nach innen reichende Wölbung auf, die vorteilhafterweise die dem Kegelstumpf entsprechende Aufnahme des kesselseitigen Kupplungsteils aufnimmt, so daß die Kupplung trotz ihrer aus Stabilitätsgründen zweckmäßigen Höhe nicht zu einer größeren Bauhöhe führt.

Wie schon erwähnt, wird in vielen Fällen der Kessel der Maschine während des Knet-oder Mischbetriebs gedreht. Der diesem Zweck dienende Antrieb des Kessels kann dann in an sich bekannter Weise über eine in der Konsole der Maschine gelagerte Antriebswelle erfolgen, wenn gemäß einer vorteilhaften Weiterbildung der Erfindung die Kupplung zwischen dem Kessel und der Maschine als Klauenkupplung ausgebildet wird. Dazu ist an dem Kegelstumpf wenigstens ein radial abstehender Vorsprung vorgesehen, der sich im wesentlichen über die Höhe des Kegelstumpfes erstreckt und - im Kupplungszustand - mit einer entsprechenden Nut in dem kesselseitigen Kupplungsteil in Umfangsrichtung formschlüssig im Eingriff steht. Hierdurch wird eine einwandfreie Kraftübertragung gewährleistet, ohne die Führungs- und Haltefunktion des Kegelstumpfes und seines Gegenstückes am Kessel zu beeinträchtigen. Der wenigstens eine Vorsprung ist vorzugsweise als Teil eines Einsatzes ausgebildet, welcher in einer dafür vorgesehenen, die Mantelfläche des Kegelstumpfes durchsetzenden Ausnehmung im Kegelstumpf aufgenommen ist, und dessen über die Mantelfläche des Kegelstumpfes radial nach außen ragender Teil den Vorsprung bildet. Der Einsatz kann so ausgebildet sein, daß mehrere, vorzugsweise symmetrisch angeordnete Vorsprünge von der Mantelfläche des Kegelstumpfes nach außen ragen. Der aus einem geeigneten Kunststoff, wie Polyamid, bestehende Einsatz ist als ein Verschleißteil leicht austauschbar, etwa mittels einer Schraube, an dem Kegelstumpf befestigt.

Die an dem Wagen höhenverstellbar und kippbar angebrachte Kesseltragvorrichtung umfaßt bei einer bevorzugten Ausführungsform der Erfindung einen Kesselhalter, der mit zwei Halteteilen für den Eingriff mit dem Kessel auf zwei sich quer zur Kippachse gegenüberliegenden Seiten versehen ist derart, daß die beiden Halteteile beim Heranfahren des Wagens an den in seiner Betriebsstellung befindlichen Kessel diesen zwischen sich aufnehmen. Damit der Kessel von der Kesseltragvorrichtung angehoben werden kann, müssen zur Aufnahme der dabei in Vertikalrichtung auftretenden Kräfte im wesentlichen horizontal liegende Tragflächen der Kesseltragvorrichtung mit im wesentlichen horizontal liegenden Auflageflächen des Kessels in Eingriff kommen. Die Tragflächen können von den Halteteilen des Kesselhalters gebildet werden, wenn über diesem an dem Kessel entsprechende radial abstehende Auflageflächen vorhanden sind. Vorzugsweise sieht die Erfindung zu diesem Zweck jedoch einen Kesselträger mit zwei im wesentlichen parallelen Tragstangen vor, die sich im wesentlichen parallel zu, aber unter den Halteteilen des Kesselhalters erstrecken und einen Abstand aufweisen, der geringer ist als der Außendurchmesser des Kessels. Die Tragstangen befinden sich in der untersten Stellung der Kesseltragvorrichtung auf einer solchen Höhe, daß sie beim Heranschieben des Wagens an den in Betriebsstellung befindlichen Kessel in einen Zwischenraum zwischen der Oberseite der den Kessel tragenden Konsole und der Außenseite des Kesselbodens gelangen, wobei die beiden Tragstangen dann zu beiden Seiten der Kupplung liegen.

Mit dieser Ausbildung wird auf einfache Weise erreicht, daß allein durch Heranfahren des Wagens an die Maschine in eine Entnahmestellung und nachfolgendes Anheben der Kesseltragvorrichtung der Kessel an der Kesseltragvorrichtung in einer das weitergehende Anheben und Kippen gestattenden Weise fixiert wird, ohne daß besondere Bedienungsgriffe zur Befestigung des Kessels an dem Wagen erforderlich wären.

Wenn der Kessel am Beginn des Entleerungsvorgangs noch weitgehend gefüllt ist, reicht es aus, den Kesselrand auf eine bequeme Arbeitshöhe zu bringen, ohne den Kessel überhaupt oder jedenfalls stark zu kippen. Bei fortschreitendem Entleerungsvorgang kann die optimale Arbeitshöhe dadurch im wesentlichen unverändert bleiben, daß der Kessel zunehmend angehoben und gleichzeitig zur Entleerungsseite des Wagens, d.h. auf die Bedienungsperson zu gekippt wird. Dies geht so weit, bis bei nahezu vollständig entleertem Kessel dieser mit seiner ganz oder nahezu vertikal liegenden Öffnung der Bedienungsperson zugewandt ist, wobei der unterste Punkt der Kesselwandung auf der für die Bedienungsperson bequemsten Arbeitshöhe liegt. Eine durch die Hubbewegung erzwungenen gleichzeitige Kippbewegung der Kesseltragvorrichtung kann auf sehr einfache Weise durch eine Zugstange bewirkt werden, die einerseits an einem rahmenfesten Teil des Wagens und andererseits an einem gegenüber der Kippachse in Richtung auf die Entleerungsseite des Wagens versetzten Teil der Kesseltragvorrichtung angelenkt ist. Daß nicht bereits bei der anfänglichen Betätigung des Hebezeugs zum Lösen der Kupplung eine Kippbewegung auftritt, kann dadurch erreicht werden, daß die rahmenfeste Seite der Zugstange in einem vertikalen Längsschlitz geführt wird. Die Kesseltragvorrichtung muß dann erst soweit angehoben werden, daß das rahmenfeste Ende der Zugstange das obere Ende des Längsschlitzes erreicht, bevor die Zugstange bei weitergehendem Anheben ein Drehmoment um die Kippachse bewirkt und dadurch eine Kippbewegung einsetzt. In dem Längsschlitz kann ein verstell- und arretierbarer Anschlag vorgesehen werden, der eine individuelle Einstellung der Hubhöhe erlaubt, bei der der Kippvorgang einsetzt.

Die Lagerung der Kesseltragvorrichtung an dem Wagen ist vorzugsweise so ausgebildet, daß die Kippachse horizontal gegenüber der Kesselmitte in Richtung auf die Entnahmeseite des Wagens versetzt ist. Dadurch wird der Kessel im Verlauf der Kippbewegung in Richtung auf die Entleerungsseite der fahrbaren Hub/Kippvorrichtung verlagert. In Verbindung mit der gekoppelten Hub-Kippbewegung kann so annähernd ein Bewegungsablauf erreicht werden, bei dem der Kessel scheinbar um eine Schwenkachse verschwenkt wird, die durch den Punkt des Kesselrandes geht, der bei Beginn des Kippvorgangs am weitesten der Entleerungsseite zugewandt ist bzw. bei gekipptem Kessel den untersten Punkt des Kesselrandes bildet. Dadurch bleiben sowohl die horizontale als auch die vertikale Arbeitsebene für die Bedienungsperson im Verlauf des zunehmend erfolgenden Hebens und Kippens annähernd konstant.

Ein Ausführungsbeispiel der Erfindung wird nachfolgend anhand der Zeichnungen näher erläutert. Es zeigen:
- Fig. 1: eine Seitenansicht der Entleerungshilfe-Anordnung gemäß der vorliegenden Erfindung, wobei links die fahrbare Hub/Kippvorrichtung und rechts die Teigknet- und -mischmaschine dargestellt ist,
- Fig. 2: eine Draufsicht auf die Anordnung von Fig. 1,
- Fig. 3: eine Vorderansicht (von links in den Fig. 1 und 2 gesehen) der Teigknet- und -mischmaschine,
- Fig. 4: eine Vorderansicht der fahrbaren Hub/Kippvorrichtung,
- Fig. 5A bis 5C: eine Draufsicht auf das kesselseitige Kupplungsteils der Klauenkupplung, eine Querschnittsansicht derselben bzw. eine Draufsicht auf das maschinenseitige Kupplungsteil, und
- Fig. 6: eine schematische Darstellung der verschiedenen Positionen des Kessels im Verlauf der Hub/Kippbewegung.

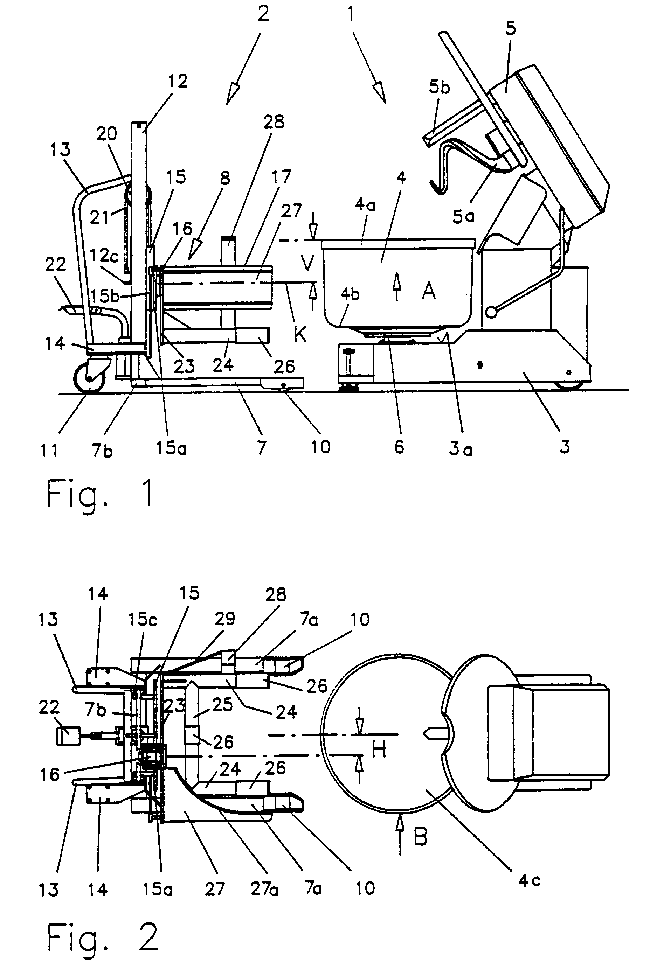

Unter Bezugnahme auf die Fig. 1 bis 4 soll zunächst der generelle Aufbau der erfindungsgemäßen Anordnung beschrieben werden.

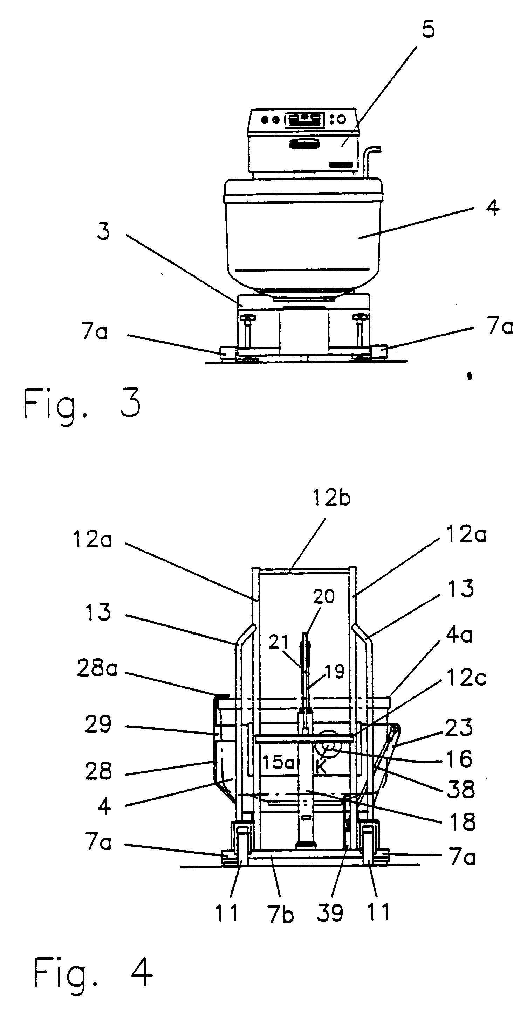

Die in den Figuren dargestellte Teigknet- und -mischmaschine unterscheidet sich mit einer später im einzelnen erläuterten Ausnahme nicht von bekannten Maschinen dieser Art, so daß auf eine detaillierte Beschreibung der Maschine verzichtet werden kann. Generell umfaßt die Maschine eine Konsole 3, in deren linkem Bereich ein runder Kessel 4 zur Aufnahme des zu knetenden bzw. mischenden Teigs dreh- und antreibbar gelagert ist. An einem an der rechten Seite (bezogen auf die Darstellung in den Fig. 1 und 2) der Konsole angeordneten senkrechten Teil ist ein Knetkopf 5 zwischen einer Knetstellung und einer Entnahmestellung um eine horizontale Achse schwenkbar angebracht. In den Fig. 1 und 2 ist der Knetkopf in seiner Entnahmestellung gezeigt, in Fig. 3 befindet er sich in der Knetstellung. Eine im Knetkopf drehbar und mittels eines Motors antreibbare Knetspirale 5a sowie ein feststehender Knetstab 5b ragen in den Kessel 4 hinein, wenn sich der Knetkopf in seiner Knetstellung befindet, während diese Knetwerkzeuge in der Entnahmestellung des Knetkopfes 5 gemäß Darstellung in Fig. 1 deutlich über den Kesselrand 4a angehoben sind.

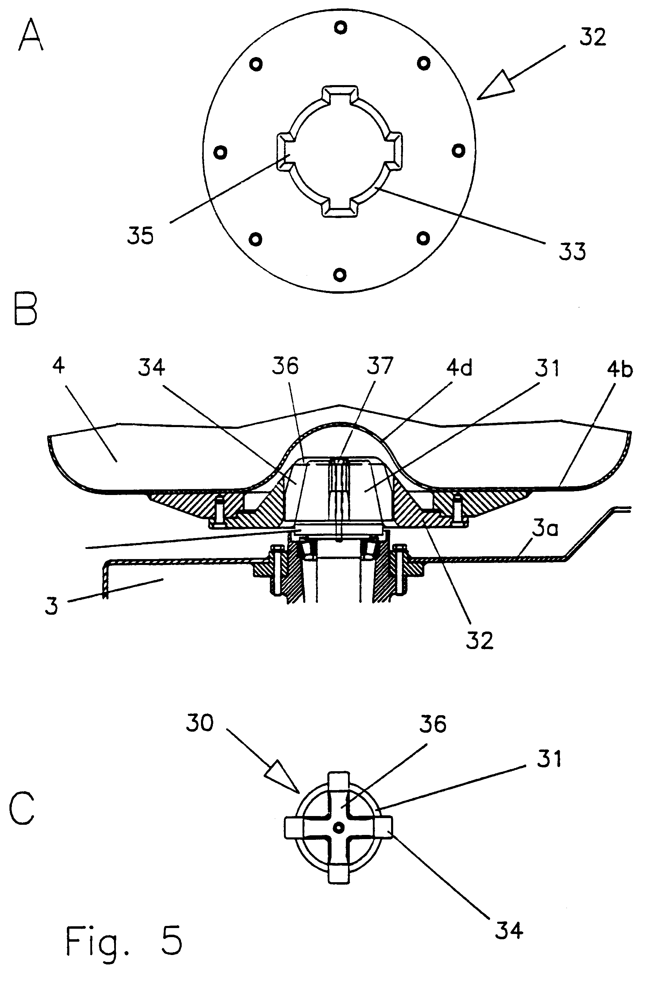

Im Unterschied zu bekannten Maschinen dieser Art ist der Kessel 4 mittels einer in Fig. 5 dargestellten und später erläuterten Kupplung 6 derart an der Konsole 3 gelagert, daß die Kupplung durch Anheben des Kessels 4 in Richtung des Pfeiles A in Fig. 1 zur Entnahme des Kessels aus der Maschine 1 gelöst werden kann.

Dieses Anheben des Kessels 4 zum Lösen der Kupplung 6, die Entnahme des Kessels aus der Maschine 1, das nachfolgende Anheben und Kippen des Kessels in eine für dessen Entleerung geeignete Stellung, das Wiedereinfahren des Kessels in die Maschine und schließlich das Absenken des Kessels zum Wiedereingriff der Kupplung 6 erfolgt erfindungsgemäß mit Hilfe einer fahrbaren Hub/Kippvorrichtung 2.

Die Hub/Kippvorrichtung 2 besteht zu diesem Zweck aus einem Fahrgestell oder Wagen 7 und einer an diesem angebrachten Kesseltragvorrichtung 8. Wie am besten aus Fig. 2 ersichtlich, umfaßt der Wagen 7 einen U-förmigen Fahrrahmen, der sich aus den beiden Seitenschenkeln 7a und einem diese am vorderen Ende verbindenden Querschenkel 7b zusammensetzt (als "vorn" sei im Rahmen des vorliegenden Textes die in den Fig. 1 und 2 linke Seite, als "hinten" die rechte Seite definiert). Der Abstand zwischen den beiden Seitenschenkeln 7a ist so gewählt, daß diese gerade die Konsole 3 der Maschine 1 zwischen sich aufnehmen können, wenn die fahrbare Hub/Kippvorrichtung 2 aus der in den Fig. 1 und 2 dargestellten Stellung nach rechts zur Maschine 1 gefahren wird. Die Phantomdarstellung der beiden Seitenschenkel 7a in Fig. 3 verdeutlicht dies. Es bedarf keiner näheren Erläuterung, daß geeignete Zentrierungs- und Führungsmittel vorgesehen werden können, um beim Heranfahren des Wagens 7 an die Maschine 1 eine exakte relative Positionierung zwischen diesen beiden Teilen zu erreichen.

Der Wagen 7 ist mittels geeignet angebrachter Laufrollen 10 und Lenkrollen 11 fahrbar. An der Vorderseite des Fahrrahmens, etwa im Bereich des Querschenkels 7b, erstreckt sich ein Hubrahmen 12 senkrecht nach oben. Wie am besten aus Fig. 4 erkennbar, umfaßt der Hubrahmen 12 zwei parallel verlaufende seitliche Führungsschienen 12a, die mittels Quertraversen 12b und 12c verbunden sind. Jeder der Führungsschienen 12a ist ein nach vorn ausladender Bügel 13 zugeordnet, dessen oberes Ende im oberen Bereich der zugehörigen Führungsschiene 12a und dessen unteres Ende an einem nach vorn vorstehenden zugehörigen Flansch 14 des Hubrahmens 12 befestigt ist. Die Bügel 13 dienen einerseits als Griffe zum Verfahren der fahrbaren Hub/Kippvorrichtung 2 und zum anderen zur zusätzlichen Aussteifung des Hubrahmens 12.

Die an dem Wagen 7 höhenverstellbar und kippbar angebrachte Kesseltragvorrichtung 8 umfaßt einen von den Führungsschienen 12a vertikal beweglich geführten Hubschlitten 15, sowie eine an diesem mittels eines Drehlagers 16 um eine horizontale Kippachse K verschwenkbar gelagerte Kesselhalterung 17. Zur Höhenverstellung des Hubschlittens 15 dient beim vorliegenden Ausführungsbeispiel als Hebezeug ein Hydraulikzylinder 18 zum Anheben oder Absenken eines an der Oberseite des Zylinders austretenden Stempels bzw. einer Hubstange 19. Am freien Ende der Hubstange 19 ist eine Umlenkrolle 20 gelagert, um die eine Zugkette oder ein Zugseil 21 geführt ist. Wie aus den Fig. 1 und 4 erkennbar, ist die Zugkette 21 mit einem Ende an der Quertraverse 12c auf der Vorderseite des Hubrahmens 12 und mit dem anderen Ende am Hubschlitten 15 an der Rückseite des Hubrahmens 12 verankert. Dadurch wird bei einem Ausfahren der Hubstange 19 aus dem Hydraulikzylinder 18 der Hubschlitten 15 angehoben und bei einem Einfahren entsprechend abgesenkt. Zum Anheben dient eine nicht weiter im einzelnen erläuterte, mittels eines in den Fig. 1 und 2 dargestellten Pedals 22 betätigbare Hydraulikpumpe (Pedal und Hydraulik sind in Fig. 4 zur Vereinfachung weggelassen). Die Druckentlastung zur Absenkung erfolgt über ein nicht dargestelltes handbetätigtes Ventil.

Beim dargestellten Ausführungsbeispiel weist der Hubschlitten 15 eine das Lager 16 tragende Schlittenplatte 15a auf, die in einer vertikalen Ebene an der Rückseite des Hubrahmens 12 liegt. Von der Schlittenplatte 15a stehen nach vorn zwei Seitenplatten 15b ab, an denen Rollen 15c befestigt sind, die in die im Schnitt U-förmigen Führungsschienen 12a eingreifen. Es sei betont, daß die spezielle Ausbildung des Hubschlittens und seiner vertikal beweglichen Führung an dem Hubrahmen 12 nur ein Beispiel darstellt, und es für die Zwecke der vorliegenden Erfindung lediglich darauf ankommt, daß die Kesseltragvorrichtung 8 an dem Wagen 7 vertikal beweglich geführt ist und mittels eines geeigneten Hebezeugs höhenverstellt werden kann. Das Hebezeug ist im Rahmen der vorliegenden Erfindung nicht auf das beschriebene Beispiel eines Hydraulikzylinders beschränkt, sondern umfaßt verschiedenste Arten von Hebezeugen, einschließlich motorisch betätigter, die unter Einsatz nur geringen körperlichen Kraftaufwands das Anheben und Absenken der mit dem Kessel 4 belasteten Kesseltragvorrichtung 8 gestatten.

Die Kesselhalterung 17 umfaßt bei dem dargestellten Ausführungsbeispiel eine Grundplatte 23, die im wesentlichen parallel zur Schlittenplatte 15a liegt und an dieser mittels des Lagers 16 um die Kippachse K drehbar gelagert ist. An der Grundplatte 23 sind zwei senkrecht nach hinten ragende Tragstangen 24 befestigt, so daß sie in der Draufsicht mit der Grundplatte 23 eine in der Darstellung der Fig. 1 und 2 zur Maschine 1 hin offene U-Form bilden.

Es ist oben erwähnt worden, daß bei voll an die Maschine 1 herangefahrenem Wagen 7 dessen Seitenschenkel 7a parallel zu den beiden Längsseiten der Konsole 3 liegen. Die Lage der Tragstangen 24 in der untersten Stellung des Hubschlittens 15 ist vorzugsweise so gewählt, daß sie in diesem an die Maschine 1 herangefahrenen Zustand symmetrisch auf beiden Seiten der Kupplung 6 eben unterhalb des Bodens 4b des Kessels 4 liegen. Wie aus den Fig. 2 und 3 ersichtlich, liegt der Kesselboden 4b etwas oberhalb der Oberseite 3a der Konsole 3, so daß die Tragstangen 24 beim Heranfahren des Wagens 7 an die Maschine 1 in den dadurch gebildeten Zwischenraum zwischen der Konsole 3 und dem Kesselboden 4b eintreten können. Es versteht sich aufgrund dieser Beschreibung, daß der Abstand zwischen den beiden Tragstangen 24 kleiner ist als der Außendurchmesser des Kessels 4, so daß die Tragstangen 24 den Kessel von unten ergreifen können. Wie in Fig. 2 dargestellt, sind die Tragstangen 24 durch eine Querstange 25 miteinander verbunden und bilden zusammen mit ihr einen Kesselträger. Die Lage der Querstange 25 ist so gewählt, daß auch sie bei voll an die Maschine 1 herangefahrenem Wagen 7 unter dem Kesselboden liegt, so daß für diesen eine stabile Dreipunktauflage geschaffen wird. Die Auflagebereiche der Tragstangen 24 und der Querstange 25 können mit einer jeweiligen Manschette aus einem Material mit einem hohen Reibungskoeffizienten ummantelt sein.

Zur seitlichen Führung des Kessels 4 in der Kesselhalterung 17 sowie zum Tragen bzw. Mittragen des Kessels bei gekippter Kesselhalterung 17 ist an der einen Seite der Grundplatte 23 ein sich von dieser nach hinten erstreckendes Halteteil 27 befestigt. Wie am besten aus der Draufsicht in Fig. 2 erkennbar, ist das Halteteil 27 auf der dem Kessel 4 zugewandten Innenseite mit einer der Kesselwandung entsprechenden Krümmung versehen und vorzugsweise mit einem Material 27a mit einem hohen Reibungskoeffizienten beschichtet. Auf der dem Halteteil 27 gegenüberliegenden Seite ist ein Haltearm 28 vorgesehen, der an dem auf dieser Seite liegenden Tragstange 24 befestigt ist und von diesem in der am besten aus Fig. 4 erkennbaren Weise nach oben ragt. Mittels einer Querverstrebung 29 (siehe Fig. 2 und 4) ist der Haltearm 28 in seinem oberen Bereich an der Grundplatte 23 gesichert. Wie wiederum am besten aus Fig. 4 erkennbar, ist das obere Ende 28a des Haltearms 28 etwa rechtwinkelig nach innen abgewinkelt, so daß es bei in der Kesselhalterung 17 aufgenommenem Kessel 4, dessen Lage in Fig. 4 gestrichelt angedeutet ist, den Kesselrand 4a übergreift und so ein sonst gegebenenfalls mögliches Herauskippen des Kessels 4 aus der Kesselhalterung 17 verhindert. Das Halteteil 27 und der Haltearm 28 bilden zusammen einen Kesselhalter.

Wie sich aus den Darstellungen und der voranstehenden Beschreibung ergibt, ist der Kesselhalter mit den Elementen 27 und 28 asymmetrisch ausgebildet und zwar zur Aufnahme großer Kräfte relativ massiv auf der einen Seite (Halteteil 27) und weniger massiv auf der anderen Seite (Haltearm 28). Solange der Kessel von der Kesseltragvorrichtung 8 lediglich angehoben, aber nicht gekippt wird, haben die Teile 27 und 28 des Kesselhalters allenfalls eine Führungsfunktion, sie haben indes keine größeren Kräfte aufzunehmen. Diese treten erst dann auf, wenn beim Kippen des Kessels ein zunehmender Teil von dessen Gewicht von dem Kesselhalter abgestützt werden muß. Da es ausreicht, den Kessel lediglich in einer Richtung um die Kippachse K aus einer Lage, in der die Kesselöffnung 4c in einer horizontalen Ebene liegt, in eine Lage zu kippen, in der sie gegenüber der horizontalen Ebene bis hin zur Vertikalstellung geneigt ist, und dementsprechend eine Gewichtsverlagerung nur zur einen Seite des Kesselhalters auftritt, braucht nur das Halteteil 27 so ausgebildet zu werden, daß es dem Kesselgewicht standhält. Dadurch können die Herstellungskosten für die fahrbare Hub/Kippvorrichtung gesenkt werden. Es sei aber betont, daß diese beschriebene asymmetrische Ausbildung des Kesselhalters lediglich eine vorteilhafte Ausführungsform darstellt, auf das angestrebte Heben und Kippen des Kessels 4 selbst aber keinen Einfluß hat. Es sind deshalb auch Ausführungsformen möglich, bei denen anstelle des Haltearms 28 dem Halteteil 27 ein zu ihm symmetrisch ausgebildetes entsprechendes Halteteil gegenüberliegt (nicht dargestellt). Bei einer solchen Ausführungsform mit zwei entsprechend massiv gestalteten seitlichen Halteteilen könnte gegebenenfalls auch auf den Kesselträger (24, 25) verzichtet werden. Hierfür wäre nur erforderlich, daß an dem Kessel 4 sich im wesentlichen horizontal erstreckende Auflageflächen zur Auflage auf derartigen seitlichen Halteteilen vorhanden sind, die z.B. von der Unterseite eines umgebördelten Kesselrandes 4a gebildet werden könnten.

Bevor der Vorgang der Entnahme des Kessels 4 aus der Maschine 1 und seiner Bewegung mit Hilfe der fahrbaren Hub/Kippvorrichtung 2 zum Zwecke der Entleerung beschrieben wird, soll im folgenden zunächst unter Bezugnahme auf die Fig. 5A bis 5C eine bevorzugte Ausführungsform der Kupplung 6 beschrieben werden, über die der Kessel 4 lösbar an der Maschine 1 verankert ist.

Bei dieser bevorzugten Ausführungsform der Kupplung 6 handelt es sich um eine Klauenkupplung, die einerseits die stabile drehbare Lagerung des Kessels 4 an der Konsole 3 und andererseits die Übertragung einer Antriebskraft von einer in der Konsole 3 gelagerten Drehwelle auf den Kessel 4 bewirkt. Fig. 5A zeigt eine Draufsicht auf das in der Mitte des Kesselbodens von unten angeschraubte kesselseitige Kupplungsteil, während Fig. 5C eine Draufsicht auf das maschinenseitige Kupplungsteil ist. Fig. 5B zeigt in einer Teilschnittansicht den Eingriff dieser beiden Kupplungsteile. Wie in diesen Figuren dargestellt, erfolgt die Halterung des Kessels 4 mit Hilfe eines Kegelstumpfes 31 als konusförmigem Teil des maschinenseitigen Kupplungsteils 30. Das kesselseitige Kupplungsteil 32, hinsichtlich dessen Ausbildung ausdrücklich auf die Fig. 5A und 5B Bezug genommen wird, ist mit einer komplementär geformten Aufnahme 33 für den Kegelstumpf 31 versehen. Zur Erzielung der erforderlichen stabilen Halterung des Kessels 4 an der Konsole 3 der Maschine 1 ist eine gewisse Eingriffshöhe zwischen dem Kegelstumpf 31 und der Aufnahme 33 erforderlich. Zur Vermeidung eines hierdurch andernfalls bedingten größeren Abstandes zwischen dem Kesselboden 4b und der Oberseite 3a der Konsole 3 macht sich die Erfindung die Tatsache zunutze, daß der Kesselboden 4b aus mit der Erfindung an sich nicht im Zusammenhang stehenden und daher hier nicht erläuterten Gründen in seinem zentralen Bereich eine nach innen ragende Wölbung 4d aufweist, die einen größeren Teil des Kupplungsteils 32 aufnimmt und so eine relativ große Höhe des Kegelstumpfes 31 erlaubt, ohne die Bauhöhe der Maschine 1 merklich zu vergrößern.

Die konusförmige Ausbildung der beiden Kupplungsteile erlaubt es, die Kupplungsteile auf einfache Weise durch vertikale Relativbewegung außer Eingriff oder in Eingriff zu bringen, wobei beim In-Eingriff-Bringen eine selbsttätige Zentrierung erfolgt, die durch Abrundung oder Anfasen der zunächst miteinander in Eingriff tretenden Kanten noch verbessert wird. Die Relativlage zwischen dem in der Kesselhalterung 17 befindlichen Kessel einerseits und der Maschine 1 andererseits beim Wiedereinsetzen des Kessels in die Maschine ist, solange nicht sehr teure Präzisionsführungen verwendet werden, zwangsläufig mit einer gewissen Toleranz versehen. Die selbstzentrierende Ausbildung der Kupplung 6 kompensiert diese Toleranz und trägt somit dazu bei, daß die fahrbare Hub/Kippvorrichtung 2, ohne eine besonders genaue Führung der Kesselhalterung 17 gegenüber dem Wagen 7 einerseits und des Wagens 7 gegenüber der Maschine 1 andererseits auskommt und auch deshalb preiswert hergestellt werden kann.

Der Öffnungswinkel des Kegelstumpfes 31 und entsprechend seiner Aufnahme 33 im kesselseitigen Kupplungsteil 32 ist im Hinblick darauf bestimmt, daß eine Selbsthemmung zwischen den beiden Kupplungsteilen vermieden wird, eine für die stabile Halterung erforderliche Eingriffshöhe gewährleistet ist und die beschriebene Selbstzentrierung ermöglicht wird.

Zur Drehmomentenübertragung von dem maschinenseitigen Kupplungsteil 30 auf das kesselseitige Kupplungsteil 32 ist das eine Kupplungsteil, im dargestellten Ausführungsbeispiel das erstere, mit Klauen oder Vorsprüngen 34 und das andere, also hier das letztere, mit zu diesen komplementär geformten Nuten 35 versehen. Bei der dargestellten bevorzugten Ausführungsform sind die hier kreuzweise angeordneten vier Vorsprünge 34 Bestandteil eines ein austauschbares Verschleißteil darstellenden Einsatzes 36 des maschinenseitigen Kupplungsteils 30. Der Einsatz 36 erstreckt sich im wesentlichen über die ganze Höhe des Kegelstumpfes 31 und überragt dessen obere Kante ein wenig, wie aus Fig. 5B ersichtlich. Es bedarf keiner näheren Erläuterung, daß zur Aufnahme des Einsatzes 36 in den Kegelstumpf 31 dieser mit einer entsprechenden Ausnehmung versehen sein muß, so daß der Einsatz 36 von oben (bezogen auf die Darstellung in Fig. 5B) in dem Kegelstumpf eingesetzt werden kann, um an ihm, beispielsweise mittels einer Schraube 37, befestigt zu werden. Die im vorliegenden Fall vier Ansätze 34 ragen im wesentlichen über die ganze axiale Höhe des Kegelstumpfes 31 radial über dessen Mantelfläche nach außen und bilden dadurch die Klauen der Klauenkupplung. Die Ansätze 34 des maschinenseitigen Kupplungsteils und die ihnen entsprechenden Nuten 35 des kesselseitigen Kupplungsteiles bilden bei Kupplungseingriff in Umfangsrichtung die für Klauenkupplungen an sich typische formschlüssige Verbindung, so daß zusätzlich zur stabilen Halterung des Kessels 4 an der Konsole 3 der Maschinen 1 eine Antriebskraft zum Drehen des Kessels über die Kupplung 6 übertragen werden kann, ohne daß deren oben beschriebene einfache Lösbarkeit durch Vertikalbewegung beeinträchtigt würde. Es sei betont, daß die beim erläuterten Ausführungsbeispiel in der Draufsicht kreuzförmig angeordneten vier Klauen oder Ansätze 34 lediglich ein Beispiel darstellen, daß im Einzelfall möglicherweise ein einziger Ansatz ausreichen mag, daß aber auch eine andere Zahl je nach Materialbeschaffenheit und zu übertragendem Drehmoment in Frage kommt, wobei bei mehreren Ansätzen diese vorzugsweise symmetrisch über den Umfang verteilt sind. Der die Ansätze 34 aufweisende Einsatz 36 besteht vorzugsweise aus einem Kunststoff, etwa Polyamid, ist auf diese Weise leicht herzustellen und im Bedarfsfall sehr einfach und ohne große Kosten austauschbar. Dadurch, daß der Einsatz 36 etwas über das Ende des Kegelstumpfes 31 nach oben hinausragt, ist die Wahrscheinlichkeit sehr groß, daß beim Wiedereinsetzen des Kessels dessen Kupplungsteil 32 zunächst mit dem Einsatz 36 in Berührung kommt und die Zentrierung des Kessels einleitet, was durch geringe Reibung zwischen dem Metall des kesselseitigen Kupplungsteils 32 und dem Kunststoff des Einsatzes 36 begünstigt wird.

Zur Beschreibung der Funktion der erfindungsgemäßen Entleerungshilfe-Anordnung sei nun erneut insbesondere auf die Fig. 1 und 2 Bezug genommen. Es sei angenommen, daß im Kessel 4 befindlicher Teig soweit in der Maschine 1 behandelt wurde, daß der Kessel zur Weiterverarbeitung des Teigs entleert werden soll. Der Knetkopf 5 ist zu diesem Zweck bereits aus seiner Knetstellung in die Entnahmestellung geschwenkt. In diesem Zustand wird die fahrbare Hub/Kippvorrichtung 2 mit - wie dargestellt - voll abgesenkter Kesseltragvorrichtung 8 aus der in den Fig. 1 und 2 gezeigten Stellung nach rechts zur Maschine 1 hin geschoben. Wie schon erwähnt, nehmen die beiden Seitenschenkel 7a des Wagens 7 dabei die Konsole 3 der Maschine 1 zwischen sich auf, während die Tragstangen 24 seitlich an der Kupplung 6 vorbei unter den Kesselboden 4b gelangen und das Halteteil 27 und der Haltearm 28 den Kessel an im wesentlichen gegenüberliegenden Seiten zwischen sich aufnehmen. Wenn der Wagen 7 ganz an die Maschine 1 herangefahren ist, ist der Kessel 4 in die Kesselhalterung 17 eingetreten und steht mit ihr im Bereich des Kesselbodens und der seitlichen Kesselwand im Eingriff. Der Kessel ist damit an der fahrbaren Hub/Kippvorrichtung fixiert. In diesem Zustand wirkt auf den Kessel 4 an sich keine Kraft in Richtung auf die offene Seite der Kesselhalterung 17, der sich übrigen auch die hohe Haftreibung zwischen dem Kessel und den Manschetten 26 bzw. der Beschichtung 27a entgegensetzen würde. Gleichwohl könnte eine zusätzliche Sicherung (nicht gezeigt) vorgesehen werden, die selbst bei manuellem Zug an dem Kessel oder bei Verfahren der mit dem Kessel 4 beladenen fahrbaren Hub/Kippvorrichtung 2 auf einer schiefen Ebene ein Herausrutschen des Kessels verhindern würde. Zu diesem Zweck könnte etwa ein um eine zur Kippachse K im wesentlichen senkrechte Achse schwenkbarer, in eine Schwenkrichtung vorgespannter Haken an der Grundplatte angebracht sein, der in der untersten Stellung der Kesseltragvorrichtung 8 durch einen gegenüber dem Hubrahmen 12 orstfesten Anschlag in einer Lösestellung gehalten wird und beim Anheben außer Eingriff mit dem Anschlag gerät und durch seine Vorspannung über den Kesselrand klappt und den Kessel dadurch verriegelt.

In diesem Zustand muß die Kesseltragvorrichtung 8 zunächst senkrecht angehoben werden, ohne daß eine Schwenkbewegung der Kesselhalterung 17 um die Kippachse K auftritt, damit beim Lösen der Kupplung 6 kein Verkanten der beiden Kupplungsteile gegeneinander auftritt. Dabei ist ein geringes, im Rahmen der Herstellungstoleranzen bei den angestrebten geringen Kosten für die erfindungsgemäße Anordnung kaum vermeidliches, Verkanten aufgrund der beschriebenen Ausbildung der Kupplung 6 unschädlich. Ein stärkeres Verkanten aufgrund einer ungewollten Schwenkbewegung der Kesselhalterung 17 um die Kippachse K wird durch eine spezielle Arretierung erreicht. Wie aus den Fig. 2 und 4 erkennbar, ist die Kippachse K aufgrund einer entsprechenden Anordnung des Lagers 16 gegenüber der Längsmittelachse des Wagens 7 und der damit im wesentlichen übereinstimmenden Längsmittelachse der Kesselhalterung 17 in Richtung auf die Entleerungsseite der Vorrichtung 2 versetzt. Die Entleerungsseite der Vorrichtung 2 ist die dem Betrachter zugewandte Seite in Fig. 1 bzw. die untere Seite in der Darstellung von Fig. 2, das heißt die Seite zu der die Kesselöffnung C im weiteren Bewegungsablauf gekippt wird. Aufgrund der asymmetrischen Lagerung der Kesselhalterung 17 an dem Hubschlitten 15 entsteht mit und ohne Belastung durch den Kessel 4 ein in der Darstellung von Fig. 4 im Gegenuhrzeigersinn wirkendes Drehmoment. Durch einen in den Zeichnungen nicht dargestellten Anschlag zwischen der Kesselhalterung 17 einerseits und entweder dem Hubschlitten 15 oder einem wagenfesten Teil kann eine Drehung aufgrund dieses Drehmoments verhindert werden, das heißt die Kesselhalterung 17 wird durch die Schwerkraft gegen einen solchen Anschlag in ihre waagerechte Position vorgespannt.

Durch Betätigen der Hydraulikpumpe mit Hilfe des Pedals 22 werden die Kesselhalterung 17 und mit ihr der Kessel 4 angehoben, wobei das kesselseitige Kupplungsteil 32 in der Darstellung von Fig. 5B gegenüber dem maschinenseitigen Kupplungsteils 30 nach oben gleitet. Sobald im Verlauf dieser Bewegung die Unterkante des kesselseitigen Kupplungsteils 32 über der Oberkante des maschinenseitigen Kupplungsteils 30 liegt, kann der Kessel 4 aus der Maschine entnommen werden. Zu diesem Zweck wird der Wagen 7 von der Maschine 1 abgezogen, und kann dann zu einem beliebigen Platz gefahren werden.

Fig. 4 zeigt eine Zugstange 38, die beim dargestellten Ausführungsbeispiel dazu dient, das Kippen des Kessels abhängig von dessen Vertikalbewegung zu steuern. Das untere Ende der Zugstange 38 ist schwenk- und verschiebbar in einen vertikal verlaufenden Längsschlitz 39 neben einer der beiden Führungsschienen 12a geführt, und ihr oberes Ende ist der Grundplatte 23 der Kesselhalterung 17 angelenkt. Bei dem zuvor beschriebenen Anheben des Kessels 4 zum Lösen der Kupplung 6 wird auch die Zugstange 38 zusammen mit der Kesselhalterung 17 nach oben bewegt, wobei ihr unteres Ende längs dem Längsschlitz 39 gleitet, bis die obere Begrenzung des Längsschlitzes 39 erreicht ist. Die Abmessungen sind so gewählt, daß das untere Ende der Zugstange 38 die obere Begrenzung des Längsschlitzes 39 frühestens dann erreicht, wenn der Kessel 4 in die zu seiner Entnahme aus der Maschine 1 erforderliche Höhe angehoben wurde. Zur optimalen Einstellung kann die Länge der Zugstange 38 justierbar sein.

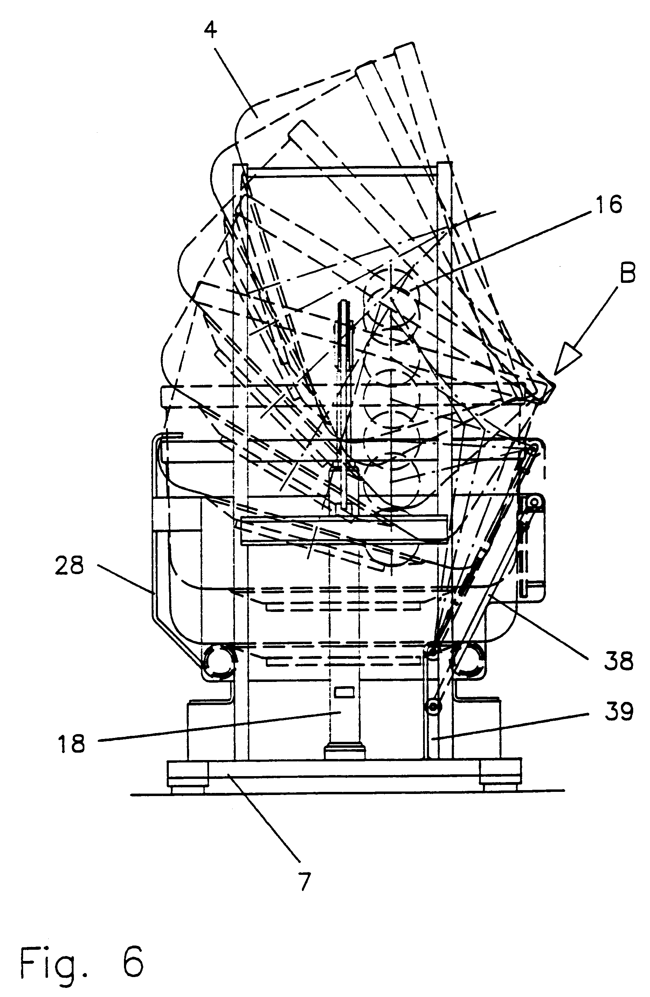

Wenn die Kesselhalterung 17 durch Betätigen der Hydraulikpumpe über den Punkt hinaus angehoben wird, wo das untere Ende der Zugstange 38 die obere Begrenzung des Längsschlitzes 39 erreicht hat, dann ist die Lage des Anlenkpunkts des oberen Endes der Zugstange 38 an der Grundplatte 23 durch den Schnittpunkt zweier Kreise bestimmt, eines ersten um das untere Ende der Zugstange 38 und eines zweiten um die Kippachse K, von denen der zweite beim Anheben vertikal parallelverschoben wird. Durch geeignete Wahl der Lage der Kippachse (Vertikalversatz V gegenüber dem Kesselrand 4a (siehe. Fig. 1) und Horizontalversatz H gegenüber der Mitte des Kessels 4 (siehe Fig. 2)) sowie der Lage der Anlenkpunkte der Zugstange 38 und ihrer Länge erreicht man bei dem weiteren Anheben der Kesselhalterung 17 für den Kessel 4 einen Bewegungsablauf, wie er durch die verschiedenen Positionen des Kessels in Fig. 6 dargestellt ist. Wie aus Fig. 6 erkennbar, ändert sich die Position eines Punktes B des Kesselrandes 4a im Verlauf der kombinierten Hub/Kippbewegung nur wenig, fast so, wie wenn der Kessel 4 um eine durch den Punkt B des Kesselrandes horizontal verlaufende Schwenkachse geschwenkt würde. Dies bedeutet, daß, wenn der Kessel 4 erst einmal durch reines Anheben in eine seine Entnahme aus der Maschine 1 erlaubende und zur Entleerung durch die Bedienungsperson bequeme Position angehoben wurde, beim weiteren Bewegungsablauf die optimale Arbeitshöhe für die Bedienungsperson ohne weitere Einflußnahme, mit Ausnahme der Betätigung des Pedals 22, praktisch konstant bleibt, so daß der Teig im wesentlichen waagerecht und nicht senkrecht aus dem Kessel entnommen werden kann. Da zugleich der Kessel immer weiter auf die Bedienungsperson zu verlagert wird, bleibt auch in Horizontalrichtung die Stelle, an der Teig aus dem Kessel entnommen wird, im wesentlichen gleich. Ergonomischen Gesichtspunkten wird so in optimaler Weise Rechnung getragen, was die Entleerung des Kessels sehr viel leichter macht. Wie beschrieben wird dies gemäß der vorliegenden Erfindung mittels einer einfachen und preiswerten Anordnung erzielt, die auch in kleineren Bäckereibetrieben eingesetzt werden kann.

Bei dem dargestellten und beschriebenen Ausführungsbeispiel wird die erzwungene Kippbewegung beim Anheben des Kessels 4 über eine durch das obere Ende des Längsschlitzes 39 bestimmte Hubhöhe hinaus mit Hilfe der Zugstange 38 und ihrer beschriebenen Anordnung erreicht. Dies stellt eine einfache und preiswerte Möglichkeit zur Erzielung eines die Kesselentleerung stark vereinfachenden, ergonomischen Bewegungsablaufs dar. Ein gleicher oder ähnlicher Bewegungsablauf kann aber auch auf andere Weise, zum Beispiel mittels einer Kulissenführung oder einer an beiden Enden fest angelenkten Teleskopzugstange erreicht werden. Im Fall einer Teleskopzugstange würde sich diese zur Erzielung der anfänglichen reinen Hubbewegung zunächst ausdehnen und danach in ihrer Länge konstant bleiben.

Nach der Entleerung und ggf. Reinigung des Kessels wird die Kesselhalterung 17 durch Druckentlastung des Hydraulikzylinders 18 soweit abgesenkt, daß der Kessel wieder in die Maschine 1 zurückgefahren werden kann. Dann erfolgt das Absenken in die unterste Stellung wodurch die beiden Kupplungsteile der Kupplung 6 wieder in Eingriff miteinander gelangen. Die fahrbare Hub/Kippvorrichtung 2 kann nun wieder von der Maschine 1 abgezogen werden.

## Patentansprüche

1. Entleerungshilfe-Anordnung für den Kessel (4) einer Teigknet- und -mischmaschine (1) bei der der Kessel an seinem Boden (4b) drehbar gelagert ist, mittels eines Wagens (7) aus seiner Betriebsstellung in der Teigknet- und -mischmaschine entfernbar ist und mittels einer ein Hebezeug (18-21) enthaltenden Hub/Kippvorrichtung (2) anhebbar und mit seiner Öffnung (4c) in eine gegen die Horizontale geneigte Entleerungsstellung kippbar ist, **dadurch gekennzeichnet**, daß
die Hub/Kippvorrichtung (2) eine höhenverstellbar und um eine im wesentlichen horizontale Achse (K) kippbar am Wagen (7) gelagerte Kesseltragvorrichtung (8) ist, welche durch Verschieben des Wagens (7) relativ zur Teigknet- und -mischmaschine (1) bei in Betriebsstellung befindlichem Kessel (4) mit diesem in Trageingriff bringbar bzw. aus dem Trageingriff lösbar ist, und
der Kessel (4) über eine formschlüssige Kupplung (6) mit einer in der Teigknet- und -mischmaschine gelagerten Weile verbunden ist, wobei die Kupplung so beschaffen ist, daß ihr kesselseitiges Kupplungsteil (32) und ihr maschinenseitiges Kupplungsteil (30) durch Vertikalbewegung des Kessels (4) relativ zur Teigknet- und -mischmaschine voneinander lösbar bzw. miteinander in Eingriff bringbar sind.

2. Entleerungshilfe-Anordnung nach Anspruch 1, **dadurch gekennzeichnet**, daß das maschinenseitige Kupplungsteil (30) einen Kegelstumpf (31) umfaßt und das kesselseitige Kupplungsteil (32) eine dazu im wesentlichen komplementäre Aufnahme aufweist, wobei der Öffnungswinkel des Kegels so gewählt ist, daß keine Selbsthemmung auftritt.

3. Entleerungshilfe-Anordnung nach Anspruch 2, **dadurch gekennzeichnet**, daß die Welle eine Antriebswelle zum Drehen des Kessels (4) ist und zur Bildung einer Klauenkupplung an dem Kegelstumpf (31) wenigstens ein radial abstehender Vorsprung (34) ausgebildet ist, der im Kupplungszustand mit einer entsprechenden Nut (35) im kesselseitigen Kupplungsteil (32) in Umfangsrichtung eine formschlüssige Verbindung herstellt.

4. Entleerungshilfe-Anordnung nach Anspruch 3, **dadurch gekennzeichnet**, daß der Vorsprung (34) Teil eines Einsatzes (36) ist, der in einer zu diesem Zweck vorgesehenen Ausnehmung des Kegelstumpfes (31) austauschbar befestigt ist.

5. Entleerungshilfe-Anordnung nach Anspruch 4, **dadurch gekennzeichnet**, daß der Einsatz (36) aus Kunststoff besteht.

6. Entleerungshilfe-Anordnung nach einem der vorhergehenden Ansprüche, **dadurch gekennzeichnet**, daß die Kesseltragvorrichtung (8) einen auf zwei sich quer zur Kippachse gegenüberliegenden Seiten mit der Kesselwand in Eingriff tretenden Kesselhalter (27, 28), sowie Tragflächen zum Eingriff mit sich im wesentlichen horizontal erstreckenden Auflageflächen des Kessels umfaßt.

7. Entleerungshilfe-Anordnung nach Anspruch 6, **dadurch gekennzeichnet**, daß die Auflageflächen von dem Kesselboden (4b) gebildet werden und die Tragflächen Flächen von zwei Tragstangen (24) eines Kesselträgers umfassen, die sich parallel zur Kippachse (K) erstrecken, deren Abstand kleiner ist als der Außendurchmesser des Kessels (4) und die in der untersten Stellung der Kesseltragvorrichtung (8) unterhalb des Kesselbodens des in seiner Betriebsstellung befindlichen Kessels liegen.

8. Entleerungshilfe-Anordnung nach Anspruch 6 oder 7, **dadurch gekennzeichnet**, daß die Kesseltragvorrichtung eine sich beim Anheben des Kessels aus seiner Betriebsstellung selbsttätig schließende und beim Absenken des Kessels in die Betriebsstellung selbsttätig öffnende Sicherung umfaßt, die den Kessel gegen eine Bewegung relativ zum Kesselhalter in Richtung auf die offene Seite des Kesselhalters sichert.

9. Entleerungshilfe-Anordnung nach einem der vorhergehenden Ansprüche, **dadurch gekennzeichnet**, daß eine die Kippbewegung abhängig von der Hubbewegung der Kesseltragvorrichtung steuernde Einrichtung (38, 39) vorgesehen und so beschaffen ist, daß der Kessel nach Erreichen einer vorgegebenen Hubhöhe beim weiteren Anheben zunehmend gekippt wird.

10. Entleerungshilfe-Anordnung nach Anspruch 9, **dadurch gekennzeichnet**, daß die Kippachse (K) relativ zur Kesselmitte in Richtung auf die Entleerungsseite des Wagens (7) versetzt ist.

11. Entleerungshilfe-Anordnung nach Anspruch 10, **dadurch gekennzeichnet**, daß die Lage der Kippachse (K) bezogen auf die Lage des Kessels (4) derart gewählt und die die Kippbewegung steuernde Einrichtung (38, 39) so beschaffen ist, daß der bei Beginn der Kippbewegung der Entleerungsseite zugewandte Teil des Kesselrandes (4a) während der kombinierten Hub-Kippbewegung sowohl in Horizontalrichtung als auch in Vertikalrichtung im wesentlichen in unveränderter Position bleibt.

12. Entleerungshilfe-Anordnung nach einem der vorhergehenden Ansprüche, **dadurch gekennzeichnet**, daß zwischen einem um die Kippachse (K) kippbaren Teil (23-28) der Kesseltragvorrichtung (8) und einem nicht kippbaren Teil Eingriffsmittel vorgesehen sind, die eine Kippbewegung des kippbaren Teils in der einen Richtung über den Zustand hinaus verhindern, in welchem der kippbare Teil eine zum In-Eingrifftreten mit dem in Betriebsstellung in der Maschine (1) befindlichen Kessel (4) erforderliche Winkelstellung um die Kippachse einnimmt, und daß die Eingriffsmittel in gegenseitigen Eingriff vorgespannt sind.

13. Entleerungshilfe-Anordnung nach den Ansprüchen 10 und 12, **dadurch gekennzeichnet**, daß die Eingriffsmittel durch die auf den kippbaren Teil (23-28) einwirkende Schwerkraft in gegenseitigen Eingriff vorgespannt sind.

## Claims

1. An auxiliary arrangement for emptying the receptacle (4) of a dough kneading and mixing machine (1) in which the receptacle is rotatably mounted at its bottom (4b), can be removed by means of a carriage (7) from its operative position in the dough kneading and mixing machine and can be raised by means of a lift/tilt apparatus (2) including a hoisting assembly (18-21) and can be tilted with its opening (4c) into an emptying position of being inclined relative to the horizontal, characterised in that
the lift/tilt apparatus (2) is a receptacle carrier apparatus (8) which is mounted on the carriage (7) adjustably in respect of height and tiltably about a substantially horizontal axis (K) and which by displacement of the carriage (7) relative to the dough kneading and mixing machine (1), with the receptacle (4) in the operative position, can be brought into carrying engagement therewith and can be released from the condition of carrying engagement, and
the receptacle (4) is connected by way of a positively locking coupling (6) to a shaft mounted in the dough kneading and mixing machine, the coupling being such that its coupling portion (32) towards the receptacle and its coupling portion (30) towards the machine can be disengaged from each other or brought into engagement with each other by vertical movement of the receptacle (4) relative to the dough kneading and mixing machine.

2. An auxiliary arrangement according to claim 1 characterised in that the coupling portion (30) at the machine side includes a truncated cone (31) and the coupling portion at the receptacle side has a receiving means which is substantially complementary thereto, the angle of opening of the cone being so selected that a self-locking effect does not occur.

3. An auxiliary arrangement according to claim 2 characterised in that the shaft is a drive shaft for rotating the receptacle (4) and provided on the truncated cone (31), to form a dog coupling, there is at least one radially projecting projection (34) which in the coupled condition forms a positively locking connection in the peripheral direction with a corresponding groove (35) in the coupling portion (32) at the receptacle side.

4. An auxiliary arrangement according to claim 3 characterised in that the projection (34) is part of an insert (36) which is interchangeably fixed in a recess provided for that purpose in the truncated cone (31).

5. An auxiliary arrangement according to claim 4 characterised in that the insert (36) comprises plastics material.

6. An auxiliary arrangement according to one of the preceding claims characterised in that the receptacle carrier apparatus (8) includes a receptacle holder (27, 28) which comes into engagement with the receptacle wall on two sides which are in mutually opposite relationship transversely to the tilt axis, and carrier surfaces for engagement with substantially horizontally extending contact surfaces of the receptacle.

7. An auxiliary arrangement according to claim 6 characterised in that the contact surfaces are formed by the receptacle bottom (4b) and the carrier surfaces include surfaces of two carrier bars (24) of a receptacle carrier, which extend parallel to the tilt axis (K), the spacing of which is less than the outside diameter of the receptacle (4) and which in the lowermost position of the receptacle carrier apparatus (8) are disposed beneath the bottom of the receptacle when in its operative position.

8. An auxiliary arrangement according to claim 6 or claim 7 characterised in that the receptacle carrier apparatus includes a securing means which automatically closes when the receptacle is lifted out of its operative position and which automatically opens when the receptacle is lowered into the operative position and which secures the receptacle to prevent movement relative to the receptacle holder in a direction towards the open side of the receptacle holder.

9. An auxiliary arrangement according to one of the preceding claims characterised in that a means (38, 39) for controlling the tilt movement in dependence on the lift movement of the receptacle carrier apparatus is provided and is such that after reaching a predeterminedlift height the receptacle is increasingly tilted upon being further raised.

10. An auxiliary arrangement according to claim 9 characterised in that the tilt axis (K) is displaced relative to the centre of the receptacle in a direction towards the emptying side of the carriage (7).

11. An auxiliary arrangement according to claim 10 characterised in that the position of the tilt axis (K) is so selected relative to the position of the receptacle (4) and the means (38, 39) for controlling the tilt movement is such that the part of the edge (4a) of the receptacle, which is towards the emptying side at the beginning of the tilt movement, remains substantially in an unaltered position during the combined lift-tilt movement, both in a horizontal direction and also in a vertical direction.

12. An auxiliary arrangement according to one of the preceding claims characterised in that provided between a part (23-28) of the receptacle carrier apparatus (8), which is tiltable about the tilt axis (K), and a part which is not tiltable, are engagement means which prevent a tilt movement of the tiltable part in the one direction beyond the condition in which the tiltable part assumes an angular position about the tilt axis, that is required for coming into engagement with the receptacle (4) when in the operative position in the machine (1), and that the engagement means are biased into mutual engagement.

13. An auxiliary arrangement according to claims 10 and 12 characterised in that the engagement means are biased into mutual engagement by the force of gravity acting on the tiltable part (23-28).

## Revendications

1. Dispositif pour assister la vidange d'un récipient (4) d'une machine de pétrissage et de mélange de pâle (1) dans laquelle le récipient est monté tournant par son fond (4b), peut être retiré de sa position de fonctionnement dans la machine de pétrissage et de mélange de pâle au moyen d'un chariot (7) et peut être soulevé au moyen d'un dispositif de soulèvement/basculement (2) contenant un engin de levage (18-21) et qui peut être basculé avec son ouverture (4c) dans une position de vidange inclinée par rapport à l'horizontale, caractérisé en ce que
le dispositif de soulèvement/basculement (2) est un dispositif de support de récipient (8) réglable en hauteur et monté basculant sur le chariot (7) autour d'un axe (K) sensiblement horizontal, qui peut être mis en relation de support, respectivement retiré de la relation de support avec le récipient (4) lorsque celui-ci se trouve en position de fonctionnement par coulissement du chariot (7) par rapport à la machine de pétrissage et de mélange de pâte (1), et
le récipient (4) est relié par un accouplement mécanique (6) à un arbre monté dans la machine de pétrissage et de mélange de pâte, l'accouplement étant conformé de façon que sa partie d'accouplement côté récipient (32) et sa partie d'accouplement côté machine (30) peuvent être séparées l'une de l'autre, respectivement peuvent être mises en prise l'une avec l'autre, par déplacement vertical du récipient (4) par rapport à la machine de pétrissage et de mélange de pâte.

2. Dispositif pour assister la vidange selon la revendication 1, caractérisé en ce que la partie d'accouplement côté machine (30) comprend un tronc de cône (31) et en ce que la partie d'accouplement côté récipient (32) présente un logement sensiblement complémentaire, l'angle au sommet du cône étant choisi de façon à engendrer un blocage automatique.

3. Dispositif pour assister la vidange selon la revendication 2, caractérisé en ce que l'arbre est un arbre moteur pour faire tourner le récipient (4) et en ce qu'au moins une partie en saillie radiale (34) est formée sur le tronc de cône (31) pour former un accouplement à crabot, laquelle partie en saillie réalise, en position d'accouplement, une liaison par engagement de forme dans la direction périphérique avec une rainure (35) correspondante dans la partie d'accouplement côté récipient (32).

4. Dispositif pour assister la vidange selon la revendication 3, caractérisé en ce que la partie en saillie (34) est une partie d'une pièce rapportée (36) qui est fixée de façon détachable dans un évidement du tronc de cône (31) prévu à cette fin.

5. Dispositif pour assister la vidange selon la revendication 4, caractérisé en ce que la pièce rapportée (36) est en matière plastique.

6. Dispositif pour assister la vidange selon l'une quelconque des revendications précédentes, caractérisé en ce que le dispositif de support de récipient (8) comprend un élément de maintien de récipient (27, 28) venant en prise avec la paroi du récipient sur deux côtés opposés transversalement à l'axe de basculement, ainsi que des surfaces de support destinées à coopérer avec des surfaces d'appui du récipient s'étendant principalement horizontalement.

7. Dispositif pour assister la vidange selon la revendication 6, caractérisé en ce que les surfaces d'appui sont formées par le fond du récipient (4b) et en ce que les surfaces de support comprennent les surfaces de deux barres de support (24) d'un support de récipient qui s'étendent parallèlement à l'axe de basculement (K), dont l'écartement est inférieur au diamètre extérieur du récipient (4) et qui se trouvent dans la position la plus basse du dispositif de support de récipient (8) en dessous du fond du récipient lorsque celui-ci se trouve dans sa position de fonctionnement.

8. Dispositif pour assister la vidange selon la revendication 6 ou 7, caractérisé en ce que le dispositif de support de récipient comprend un système de sécurité se refermant automatiquement lors du soulèvement du récipient hors de sa position de fonctionnement et s'ouvrant automatiquement lors de l'abaissement du récipient dans la position de fonctionnement, qui protège le récipient contre tout mouvement par rapport à l'élément de maintien de récipient en direction du côté ouvert de l'élément de maintien de récipient.

9. Dispositif pour assister la vidange selon l'une quelconque des revendications précédentes, caractérisé en ce qu'un dispositif (38, 39) commandant le mouvement de basculement en fonction du mouvement de soulèvement du dispositif de support de récipient est prévu et conçu de telle façon qu'après avoir atteint une hauteur de soulèvement prédéterminée le récipient soit progressivement basculé lorsqu'il est soulevé davantage.

10. Dispositif pour assister la vidange selon la revendication 9, caractérisé en ce que l'axe de basculement (K) est décalé par rapport au milieu du récipient vers le côté de vidange du chariot (7).

11. Dispositif pour assister la vidange selon la revendication 10, caractérisé en ce que la position de l'axe de basculement (K) est choisie de telle façon par rapport à la position du récipient (4) et le dispositif commandant le mouvement de basculement (38, 39) est conçu de telle façon qu'au début du mouvement de basculement la partie tournée vers le côté de vidange du bord du récipient (4a) demeure pendant le mouvement combiné de soulèvement - basculement en position sensiblement identique aussi bien en direction horizontale qu'en direction verticale.

12. Dispositif pour assister la vidange selon l'une quelconque des revendications précédentes, caractérisé en ce qu'entre une partie (23-28) pouvant basculer autour de l'axe de basculement (K) du dispositif de support de récipient (8) et une partie ne pouvant pas basculer des moyens de prise sont prévus qui empêchent un mouvement de basculement de la partie pouvant basculer dans une direction au-delà de la position dans laquelle la partie pouvant basculer prend une position angulaire sur l'axe de basculement nécessaire pour la mise en prise avec le récipient (4) se trouvant en position de fonctionnement dans la machine (1) et en ce que les moyens de prise sont précontraints en prise mutuelle.

13. Dispositif pour assister la vidange selon les revendications 10 et 12, caractérisé en ce que les moyens de prise sont précontraints en prise mutuelle par la pesanteur agissant sur la partie pouvant basculer (23-28).
